# EUROPÄISCHE PATENTSCHRIFT

(11) **EP 3 266 295 B1**
(45) Veröffentlichungstag und Bekanntmachung des Hinweises auf die Patenterteilung: **01.01.2020**
(21) Anmeldenummer: 17401065.2
(22) Anmeldetag: 27.06.2017
(51) Int. Cl.: A01C 7/04

(54) **EINZELKORNSÄMASCHINE MIT VEREINZELUNGSVORRICHTUNG**
SINGLE GRAIN SEEDER WITH METERING DEVICE
SEMOIR MONO-GRAINE COMPRENANT UN DISPOSITIF DE SÉPARATION

(30) Priorität: 07.07.2016 DE 102016112456
(43) Veröffentlichungstag der Anmeldung: 10.01.2018
(73) Patentinhaber: Amazonen-Werke H. Dreyer GmbH & Co. KG, 49205 Hasbergen (DE)
(72) Erfinder: Wien, Thomas, 28816 Stuhr (DE); Mertens, Daniel, 26121 Oldenburg (DE)

(56) Entgegenhaltungen:
- EP-B1- 2 225 927
- DE-A1- 3 701 132
- DE-A1-102009 043 881
- US-B1- 6 176 393

## Beschreibung

Die Erfindung betrifft eine Einzelkornsämaschine gemäß des Oberbegriffes des Patentanspruches 1.

Eine derartige Einzelkornsämaschine ist in der US 6 176 393 B1, der DE 10 2007 062 968 A1 und der EP 0 329 095 A1 beschrieben. Die Einzelkornsämaschine weist eine Vereinzelungsvorrichtung zur Vereinzelung von Saatgut auf. Die Vereinzelungsvorrichtung ist in einem Gehäuse angeordnet und umfasst zumindest ein mittels einer Welle rotierend angetriebenes, aus Kunststoff bestehendes Vereinzelungselement. Das Vereinzelungselement unterteilt den Innenraum des Gehäuses derart, dass mittels eines Gebläses eine Druckdifferenz zwischen einem ersten Bereich und einem zweiten Bereich erzeugbar ist. Das Vereinzelungselement weist entlang seiner Umfangsrichtung und/oder in seinem äußeren Bereich in der Nähe der Umfangsinie in regelmäßigen Abständen geeignete Aussparungen zur Mitnahme einzelner Körner des körnigen Gutes auf. Die Aussparungen schaffen räumliche Verbindungen zwischen dem ersten und dem zweiten Bereich des Gehäuses. Die Körner lagern sich aufgrund der Druckdifferenz an diesen Aussparungen an. Zusätzlich weist die Vereinzelungsvorrichtung an geeigneter Stelle ein Abdeckelement auf, welches durch zeitweises Abdecken der Aussparungen die Druckdifferenz und somit eine fortdauernde Anlagerung der transportierten Körner an den Aussparungen unterbindet. Derartige aus Kunststoff gefertigte Vereinzelungselemente weisen den Nachteil auf, dass sie sich aufgrund des an ihnen reibenden Saatguts statisch aufladen und die statische Aufladung die Vereinzelungsqualität beeinflusst.

Eine weitere Einzelkornsämaschine wird in EP 2 225 927 B1 beschrieben. Das beschriebene Vereinzelungselement ist aus Metall gefertigt, wodurch seine statische Aufladung reduziert wird. Die Aussparungen des Vereinzelungselements werden mit Einsatzelementen aus Kunststoff versehen. Dadurch steigt der Fertigungsaufwand für die Einzelkornsämaschine beträchtlich.

Der Erfindung liegt daher die Aufgabe zugrunde, ein Vereinzelungselement zu schaffen, welches verbesserte antistatische Eigenschaften aufweist und einfach zu fertigen ist.

Diese Aufgabe wird erfindungsgemäß dadurch gelöst, dass das Vereinzelungselement in seinem äußeren Bereich in der Nähe der Umfangslinie einen ausschließlich aus Metall gefertigten Vereinzelungsbereich aufweist, welcher sich an einen aus Kunststoff bestehenden Befestigungsbereich anschließt, und die Aussparungen in dem Vereinzelungsbereich angeordnet sind.

Durch diese Ausgestaltung ist der Vereinzelungsbereich, in dem besonders starke Reibung zwischen dem Vereinzelungselement und dem zu vereinzelnden Saatgut stattfindet, metallisch ausgeführt. Elektrostatische Aufladungen können somit in diesem Bereich nicht akkumulieren und fließen aus dem Vereinzelungsbereich ab. Dadurch wird die Vereinzelungsqualität nicht durch eine elektrostatische Aufladung beeinflusst, indem beispielsweise Saatgut an unerwünschten Positionen des Vereinzelungselements anhaftet oder das Saatgut ebenfalls elektrostatisch aufgeladen wird und aneinanderhaftet. Dies würde beispielsweise zu Fehlstellen oder Dubletten führen.

Die Aussparungen des Vereinzelungselements sind in dem metallenen Vereinzelungsbereich angeordnet. Dadurch ist kein aufwändiges Einfügen von Einsatzelementen aus Kunststoff notwendig.

Zusätzlich ist eine sehr dünne Ausführung des metallenen Vereinzelungsbereichs möglich. Dabei entsteht der Vorteil, dass die in den Aussparungen mitgenommenen Saatkörner bereits durch das Abdeckelement aus den Aussparungen gedrückt werden. Dies gilt insbesondere für beschädigte Saatkörner, sodass eine separate Reinigung der Aussparungen vielfach nicht notwendig ist.

Es ist vorteilhaft, dass der Vereinzelungsbereich den aus Kunststoff bestehenden Befestigungsbereich ringförmig umgreift oder in diesen ringförmig eingearbeitet ist. Auch die Mantelfläche eines Zylinders soll in diesem Zusammenhang als den Zylinder ringförmig umgreifend verstanden werden. Es werden dadurch die Vorzüge von metallenen und aus Kunststoff gefertigten Vereinzelungselementen kombiniert. Zur Befestigung des Vereinzelungselements in der Vereinzelungsvorrichtung ist eine geeignete Geometrie notwendig. Diese Geometrie stellt sicher, dass das Vereinzelungselement sicher befestigt ist und zuverlässig sowie spielfrei angetrieben werden kann. Kuststoffformteile können in einfacher weise in jeder beliebigen Form gefertigt werden. Daher ist die Fertigung des Befestigungsbereichs des Vereinzelungselements aus Kunststoff sehr kostengünstig. Zudem ist ein im Wesentlichen aus Kunststoff geformtes Vereinzelungselement verglichen mit einem aus Metall gefertigten besonders leicht. Somit besteht das erfindungsgemäße Vereinzelungselement aus einem inneren Trägerbereich aus Kunststoff, welches in radialer Richtung der metallische Vereinzelungsbereich eingearbeitet ist.

Die Einarbeitung des metallenen Vereinzelungsbereichs erfolgt in bevorzugter Weise derart, dass sich an den inneren aus Kunststoff gefertigten Trägerbereich der ausschließlich aus Metall gefertigte Vereinzelungsbereich anschließt.

In einer weiteren nicht dem beanspruchten Erfindungsgegenstand entsprechenden Ausführungsform des Vereinzelungselements weist der Vereinzelungsbereich eine Tragestruktur aus Kunststoff auf. Diese Tragestruktur wird im Vereinzelungsbereich metallisch beschichtet und/oder verstärkt. Dabei muss die Tragestruktur im Vereinzelungsbereich Aussparungen aufweisen, welche zumindest dieselbe Größe wie die Aussparungen im Metall des Vereinzelungsbereichs aufweisen. Die Aussparungen der Tragestruktur können auch derart groß sein, dass die Tragestruktur nur Stege aufweist, welche in das Metall des Vereinzelungsbereichs eingearbeitet sind. Neben den beschriebenen Vorteilen für den Vereinzelungsvorgang wird durch das metallische Beschichten eines Kunststoffträgers die Lebensdauer des Vereinzelungselements deutlich erhöht.

Es ist von Vorteil, dass der Vereinzelungsbereich als ringförmiges Element ausgebildet ist. Dadurch ist die Anordnung des Vereinzelungsbereichs in der Nähe der Umfangslinie des Vereinzelungselements möglich.

Es ist vorteilhaft, dass das Vereinzelungselement scheibenförmig ausgebildet ist. Scheibenförmige Vereinzelungselemente werden in bekannter Weise in den Vereinzelungsvorrichtungen typischer Einzelkornsämaschinen eingesetzt. Durch diese Ausgestaltung als Vereinzelungsscheibe ist auch das Nachrüsten älterer Einzelkornsämaschinen mit den erfindungsgemäßen Vereinzelungselementen möglich.

Ein weiterer Vorteil wird dadurch erreicht, dass der ringförmig umgreifende Vereinzelungsbereich den aus Kunststoff bestehenden Befestigungsbereich in radialer Richtung nach außen fortsetzt. Somit besteht die erfindungsgemäße Vereinzelungsscheibe aus einem inneren aus Kunststoff gefertigten Befestigungsbereich und dem sich daran anschließenden metallenen Vereinzelungsbereich. Die aufwändige Geometrie, welche zur sicheren Befestigung und zum zuverlässigen Antreiben der Vereinzelungsscheibe notwendig ist, kann dadurch in einfacher Weise kostengünstig als Kunststoffformteil gefertigt werden. Durch seine Leitfähigkeit ist Metall antistatisch. Eine vollständig aus Metall gefertigte Vereinzelungsscheibe besitzt eine hohe Masse. Durch die Fortsetzung nach des aus Kunststoff gefertigten Befestigungsbereichs mit einem metallenen Vereinzelungsbereichs, wird eine Kombination der Vorzüge beider Werkstoffe erreicht. Insbesondere weist ein derartiges Vereinzelungselement antistatische Eigenschaften im Bereich der größten Reibung zwischen Saatgut und Vereinzelungselement auf.

Es ist von Vorteil, dass der ringförmig umgreifende Vereinzelungsbereich in radialer Richtung nach außen ringförmig von einem Kunststoffbereich umschlossen ist. Durch das Umschließen des metallenen Vereinzelungsbereichs der Vereinzelungsscheibe von einem weiteren Kunststoffbereich, ist gewährleistet, dass der metallene Bereich während der Rotation der Vereinzelungsscheibe nicht mit dem Gehäuse der Vereinzelungsvorrichtung in Berührung kommt und dieses beschädigt. Zudem verbessert der äußere Kunststoffbereich die Dichtwirkung der Vereinzelungsscheibe zur Aufrechterhaltung der Druckdifferenz zwischen dem ersten und dem zweiten Gehäusebereich der Vereinzelungsvorrichtung.

Eine weitere vorteilhafte Ausführungsform ist dadurch gegeben, dass das Vereinzelungselement als Trommel ausgebildet ist. Vereinzelungstrommeln werden in bekannter Weise in den Vereinzelungsvorrichtungen typischer Einzelkornsämaschinen eingesetzt. Auch durch diese Ausgestaltung als Vereinzelungsscheibe ist auch das Nachrüsten älterer Einzelkornsämaschinen mit den erfindungsgemäßen Vereinzelungselementen möglich.

Die Reibung zwischen Saatgut und Vereinzelungselement erfolgt bei Verwendung einer Vereinzelungstrommel im Wesentlichen entlang der Mantelfläche der Vereinzelungstrommel. Daher ist es vorteilhaft, dass die Mantelfläche der Trommel aus Metall besteht. Somit kann sich die Mantelfläche nicht elektrostatisch aufladen. Dadurch wird an Anhaften des Saatgut an der Oberfläche der Vereinzelungstrommel abseits der Aussparungen und damit ein Beeinflussen der Vereinzelungsqualität vermieden.

Ein weiterer Vorteil wird dadurch erreicht, dass das Abdeckelement rollenartig ausgeführt ist, gegen die körnerfreie Seite des Vereinzelungselementes gedrückt wird und entlang dieser Seite läuft. Durch die Rolleigenschaften ist die Reibung zwischen Abdeckelement und Vereinzelungselement stark vermindert. Dies ist Vorteilhaft, weil durch den geringeren Abrieb die Lebensdauern von Abdeckelement und Vereinzelungselement verlängert werden. Mittels der Druckdifferenz haften an den Aussparungen Saatkörner. Dabei ragen sie, insbesondere bei einem dünnen metallischen Vereinzelungsbereich, zu einem geringen Teil in den körnerfreien Bereich des Gehäuses der Vereinzelungsvorrichtung. Ist das Abdeckelement als Rolle ausgebildet, welche entlang der körnerfreien Oberfläche des Vereinzelungsbereichs rollt, bewirkt es einen Impulsübertrag auf die anhaftenden Körner, welcher die Körner unbeschädigt aus der Aussparung hebt und in Richtung der Saatgutablageeinrichtungen beschleunigt.

Ist dem Vereinzelungselement zumindest ein entlang dessen körnerfreier Seite laufendes, rollenartig ausgebildetes Auswerfelement zugeordnet, ergibt sich der Vorteil dadurch, dass das Auswerfelement sternförmig entlang seiner Umfangslinie zum Eingriff in die Aussparungen geeignete Dornen aufweist. Saatgut, welches sich in den Aussparungen befindet, muss diese wieder verlassen, damit es an seinem Bestimmungsort im Boden abgelegt werden kann. Insbesondere beschädigtes Saatgut ist geeignet, um die Aussparungen mit der Zeit zu verstopfen. Ein Verstopfen ist unbedingt zu vermeiden, da die Druckdifferenz absinkt und dadurch vermehrt Fehlstellen bei der Saatgutablage auftreten. Mit dem sternförmigen Auswerfelement ist ein mechanisches Mittel gegeben, welches in die Aussparungen eingreift und geeignet ist, Verunreinigungen zuverlässig zu entfernen.

Weitere Einzelheiten der Erfindung sind der Beispielsbeschreibung und den Zeichnungen zu entnehmen. Die Zeichnungen zeigen
- Fig.1: eine Säaggregat einer Einzelkornsämaschine in Explosionsansicht von schräg vorn,
- Fig.2: eine Vereinzelungsvorrichtung in Explosionsansicht von schräg hinten,
- Fig.3: eine geöffnete Vereinzelungsvorrichtung in perspektivischer Ansicht von schräg hinten und
- Fig.4: ein scheibenförmiges Vereinzelungselement in perspektivischer Ansicht und
- Fig.5: ein trommelförmiges Vereinzelungselement in perspektivischer Ansicht.

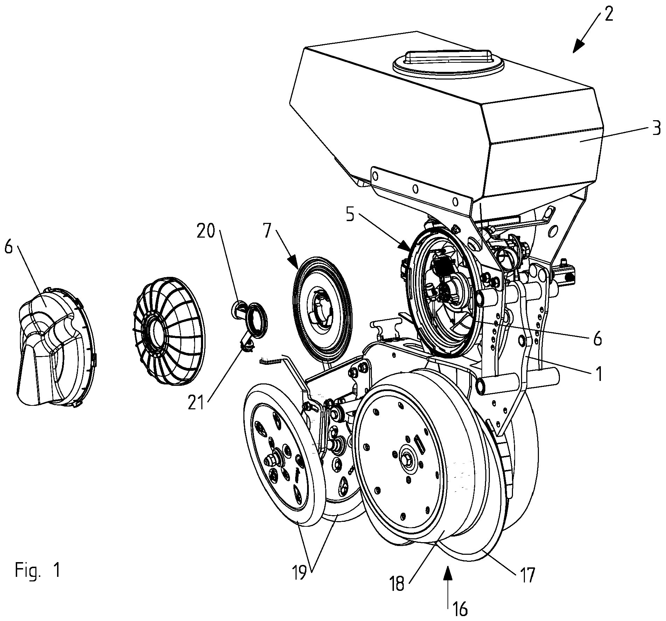

Eine landwirtschaftliche Einzelkornsämaschine weist typischerweise einen horizontal quer zur Fahrtrichtung ausgerichteten Rahmen auf. Mittels Tragelementen 1 sind an dem nicht dargestellten Rahmen mehrere Säaggregate 2 befestigt, wie sie Fig. 1 zeigt.

Ein Säaggregat 2 weist einen Vorratsbehälter 3 zur Bevorratung von zu auszubringendem Saatgut auf. Der untere Bereich des Vorratsbehälters 3 ist als Auslaufbereich ausgestaltet, in welchem eine Auslauföffnung 4 angeordnet ist. Über die Auslauföffnung 4 wird das auszubringende Saatgut an eine Vereinzelungsvorrichtung 5 abgegeben, welche unterhalb des Vorratsbehälters 3 angeordnet ist.

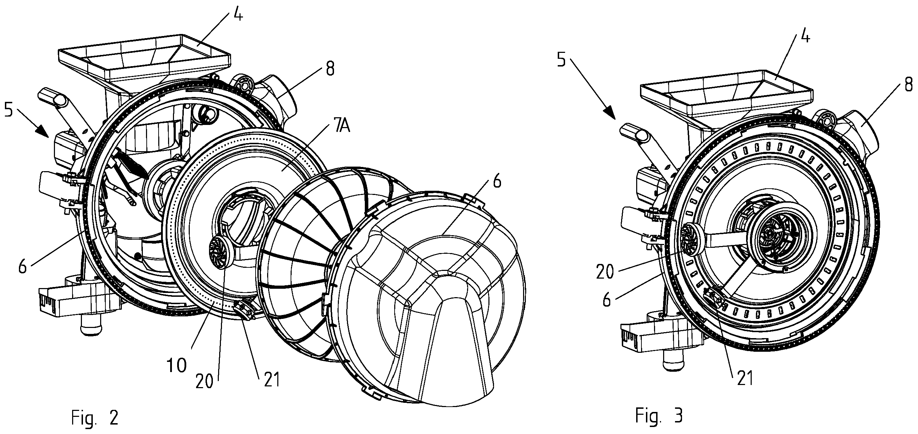

Die Vereinzelungsvorrichtung 5, gezeigt in den Fig. 2 und 3, besteht aus einem Gehäuse 6. Das Gehäuse 6 wird von einem Vereinzelungselement 7 derart in einen ersten und einen zweiten Bereich unterteilt, dass zwischen beiden Gehäusebereichen eine Druckdifferenz erzeugbar ist. Das Vereinzelungselement 7 ist in seinem Zentrum drehfest mit einer Antriebswelle verbunden und rotiert während des Betriebs der Einzelkornsämaschine. Zum Erzeugen einer Druckdifferenz zwischen den beiden Bereichen des Gehäuses 6 wird einem Bereich des Gehäuses 6 mithilfe eines nicht dargestellten Gebläses über eine Druckluftleitung 8 Luft zugeführt oder entnommen.

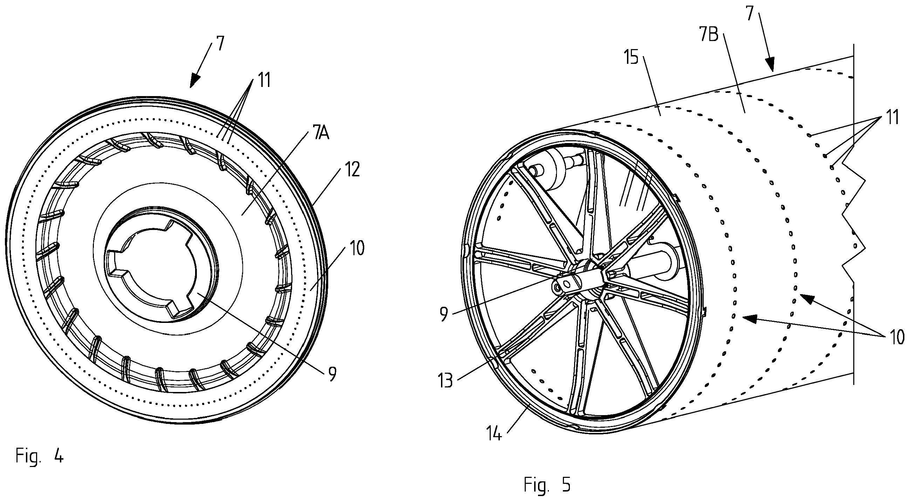

Zur Benutzung in dem Säaggregat der Fig. 1 bis 3 ist ein als Vereinzelungsscheibe 7A ausgebildetes Vereinzelungselement 7 vorgesehen, wie es Fig. 4 zeigt. Es sind ebenso Einzelkornsämaschinen üblich, welche als Vereinzelungselement 7 eine Vereinzelungstrommel 7B nutzen, wie sie in Fig. 5 gezeigt ist. In beiden Fällen basiert die Vereinzelung des Saatguts auf der Druckdifferenz zwischen beiden Bereichen des Gehäuses 6 der Vereinzelungsvorrichtung 5.

Die Vereinzelungsscheibe 7A der Fig. 4 weist einen inneren Befestigungsbereich 9 und einen äußeren Vereinzelungsbereich 10 auf. Der Befestigungsbereich 9 ist aus Kunststoff gefertigt und derart gestaltet, dass die Vereinzelungsscheibe 7A in ihrem Zentrum drehfest mit einer Antriebswelle verbunden werden kann. Die Fertigung aus Kunststoff ist besonders kostengünstig und vielseitig, da Kunststoffformteile leicht in beliebigen Formen hergestellt werden können. Zudem ist Kunststoff im Vergleich zu Metall ein besonders leichter Werkstoff.

Der Vereinzelungsbereich 10 ist in der Nähe der Umfangslinie der Vereinzelungsscheibe 7A angeordnet. Der Vereinzelungsbereich 10 weist in regelmäßigen Abständen geeignete Aussparungen 11 zur Mitnahme einzelner Saatkörner auf. Die Aussparungen 11 sind als Durchbrüche durch die Vereinzelungsscheibe 7A ausgeführt, sodass sie jeweils eine räumliche Verbindung zwischen beiden Bereichen des Gehäuses 6 schaffen. Um elektrostatische Aufladungen der Vereinzelungsscheibe 7A, welche durch Reibung des Saatguts an der Oberfläche der Vereinzelungsscheibe 7A verursacht wird, zu reduzieren, ist der Vereinzelungsbereich 10 aus Metall gefertigt. In besonders bevorzugter Ausführung schließt sich dabei an den aus Kunststoff bestehenden Befestigungsbereich 9 ein ausschließlich aus Metall bestehender Vereinzelungsbereich 10 an.

Alternativ ist außerhalb des beanspruchten Erfindungsgegenstands denkbar, dass die Vereinzelungsscheibe 7A im Vereinzelungsbereich 10 eine aus Kunststoff gefertigte Tragestruktur aufweist. Diese Tragestruktur der Vereinzelungsscheibe 7A ist im Vereinzelungsbereich 10 metallisch beschichtet und/oder verstärkt. Dabei ist es notwendig, dass der Kunststoff der Tragestruktur im Vereinzelungsbereich 10 Aussparungen 11 von zumindest gleicher Größe wie das Metall aufweist.

Die Aussparungen 11 der Tragestruktur können derart ausgedehnt sein, dass die Tragestruktur aus schmalen Kunststoffstegen besteht. Die Zwischenräume zwischen den Stegen sind dann mithilfe des Metalls verschlossen, wobei lediglich die der Vereinzelung dienenden Aussparungen 11 verbleiben.

Der metallene Vereinzelungsbereich 10 einer Vereinzelungsscheibe 7A kann in radialer Richtung nach außen zusätzlich einen aus Kunststoff gefertigten Randbereich 12 aufweisen.

Die Vereinzelungstrommel 7B der Fig. 5 weist analog zur Vereinzelungsscheibe 7A ebenfalls in ihrem Zentrum einen aus Kunststoff gefertigten Befestigungsbereich 9 auf. Von dem Befestigungsbereich ausgehend sind in radialer Richtung verlaufende Tragstege 13 angeordnet, welche die Zylinderform der Vereinzelungstrommel 7B vorgebende Ringelemente 14 tragen. Die Mantelfläche 15 des Zylinders ist metallisch bespannt. Die Mantelfläche 15 weist beabstandet zueinander Vereinzelungsbereiche 10 auf, in welchen Aussparungen 11 angeordnet sind.

Eine räumliche Verbindung zwischen den beiden Bereichen des Gehäuses 6 ist nur über die Aussparungen 11 des Vereinzelungselements 7 gegeben. Über die Aussparungen 11 ist ein Luftaustausch zwischen beiden Bereichen des Gehäuses 6 möglich. Mithilfe der Druckdifferenz und/oder der aufgrund der Druckdifferenz durch die Aussparungen 11 entstehende Saugwirkung lagern sich einzelne Saatkörner an den Aussparungen 11 an und werden auf diese Weise von dem rotierenden Vereinzelungselement 7 transportiert.

Die transportierten Saatkörner werden an definierter Position freigegeben und der Saatgutablageeinrichtung 16 zugeführt. Die Saatgutablageeinrichtung 16 umfasst als Scheibenschare ausgebildete Furchenöffnungselemente 17, Tiefenführungselemente 18 sowie Vorrichtungen 19 zum Schließen der Saatfurche.

Zum Freigeben der transportierten Saatkörner werden die Aussparungen 11 zum Unterbrechen der Druckdifferenz zwischen den beiden Bereichen des Gehäuses 6 zeitweise abgedeckt. Dazu liegt ein rollenartig ausgebildetes Abdeckelement 20 auf der körnerfreien Seite am Vereinzelungsbereich 10 des Vereinzelungselements an. Das Abdeckelement 20 rollt entlang des Vereinzelungsbereichs 10 über die Aussparungen 11, verschließt die Aussparungen 11 und überträgt einen Impuls auf die transportierten Körner, welcher die Körner aus den Aussparungen 11 heraus in Richtung der Saatgutablageeinrichtungen 16 beschleunigt.

Zum Reinigen verstopfter und/oder verschmutzter Aussparungen 11 ist zudem ein Auswerfelement 21 vorgesehen. Das Auswerfelement 21 ist sternförmig ausgebildet und weist Dornen auf, die geeignet sind, formschlüssig von der körnerfreien Seite her in die Aussparungen 11 einzugreifen und dabei mechanisch die Inhalte der Aussparungen 11 herauszudrücken.

Weist die Einzelkornsämaschine mehrere Säaggregate 2 auf, ist jedes dieser Säaggregate 2 erfindungsgemäß ausgestattet.

## Patentansprüche

1. Landwirtschaftliche Einzelkornsämaschine mit einer Vereinzelungsvorrichtung (5) zur Vereinzelung körniger Güter, vorzugsweise zur Vereinzelung von Saatgut, wobei die Vereinzelungsvorrichtung (5) ein Gehäuse (6) und zumindest ein mittels einer Welle rotierend angetriebenes Vereinzelungselement (7) aufweist, welches den Innenraum des Gehäuses (6) derart unterteilt, dass mittels eines Gebläses eine Druckdifferenz zwischen einem ersten Bereich und einem zweiten Bereich erzeugbar ist, wobei das Vereinzelungselement (7) entlang seiner Umfangsrichtung und/oder in seinem äußeren Bereich in der Nähe der Umfangslinie in regelmäßigen Abständen geeignete Aussparungen (11) zur Mitnahme einzelner Körner des körnigen Gutes aufweist, wobei die Aussparungen (11) räumliche Verbindungen zwischen dem ersten und dem zweiten Bereich des Gehäuses (6) schaffen und sich die Körner aufgrund der Druckdifferenz an diesen Aussparungen (11) anlagern, und die Vereinzelungsvorrichtung (5) ferner an geeigneter Stelle ein Abdeckelement (20) aufweist, welches zum Unterbinden der Druckdifferenz und somit einer fortdauernden Anlagerung der transportierten Körner die Aussparungen (11) zeitweise abdeckt,
**dadurch gekennzeichnet, dass** das Vereinzelungselement (7) in seinem äußeren Bereich in der Nähe der Umfangslinie einen ausschließlich aus Metall gefertigten Vereinzelungsbereich (10) aufweist, welcher sich an einen aus Kunststoff bestehenden Befestigungsbereich (9) anschließt, und die Aussparungen (11) in dem Vereinzelungsbereich (10) angeordnet sind.

2. Einzelkornsämaschine nach Anspruch 1,
**dadurch gekennzeichnet, dass** der Vereinzelungsbereich (10) den aus Kunststoff bestehenden Befestigungsbereich (9) ringförmig umgreift oder in diesen ringförmig eingearbeitet ist.

3. Einzelkornsämaschine nach zumindest einem der vorangegangenen Ansprüche
**dadurch gekennzeichnet, dass** der Vereinzelungsbereich (10) als ringförmiges Element ausgebildet ist.

4. Einzelkornsämaschine nach zumindest einem der vorangegangenen Ansprüche
**dadurch gekennzeichnet, dass** das Vereinzelungselement (7) scheibenförmig ausgebildet ist.

5. Einzelkornsämaschine nach Anspruch 2,
**dadurch gekennzeichnet, dass** der ringförmig umgreifende Vereinzelungsbereich (10) den aus Kunststoff bestehenden Befestigungsbereich (9) in radialer Richtung nach außen fortsetzt.

6. Einzelkornsämaschine nach den Ansprüchen 2 und 4, **dadurch gekennzeichnet, dass** der ringförmig umgreifende Vereinzelungsbereich (10) in radialer Richtung nach außen ringförmig von einem Kunststoffbereich umschlossen ist.

7. Einzelkornsämaschine nach Anspruch 1 oder 2,
**dadurch gekennzeichnet, dass** das Vereinzelungselement (7) als Trommel (7B) ausgebildet ist.

8. Einzelkornsämaschine nach Anspruch 7,
**dadurch gekennzeichnet, dass** die Mantelfläche (15) der Trommel (7B) aus Metall besteht.

9. Einzelkornsämaschine nach zumindest einem der vorangegangenen Ansprüche,
**dadurch gekennzeichnet, dass** das Abdeckelement (20) rollenartig ausgeführt ist, gegen die körnerfreie Seite des Vereinzelungselementes (7) gedrückt wird und entlang dieser Seite läuft.

10. Einzelkornsämaschine nach zumindest einem vorangegangenen Ansprüche,
wobei dem Vereinzelungselement (7) zumindest ein entlang dessen körnerfreier Seite laufendes, rollenartig ausgebildetes Auswerfelement (21) zugeordnet ist,
**dadurch gekennzeichnet, dass** das Auswerfelement (21) sternförmig entlang seiner Umfangslinie zum Eingriff in die Aussparungen (11) geeignete Dornen aufweist.

## Claims

1. Agricultural single grain seeder having a separating device (5) for separating granular material, preferably for separating seeds, wherein the separating device (5) has a housing (6) and at least one separating element (7) driven in rotation by a shaft, which subdivides the interior of the housing (6) in such a way that a pressure difference can be produced between a first region and a second region by means of a blower, wherein the separating element (7) has, along its circumferential direction and/or in its outer region in the vicinity of the circumferential line, suitable recesses (11) at regular intervals for entraining single grains of the granular material, wherein the recesses (11) create spatial connections between the first and the second region of the housing (6) and the grains are deposited in these recesses (11) on account of the pressure difference, and the separating device (5) additionally has a covering element (20) at a suitable location, which temporarily covers the recesses (11) in order to suppress the pressure difference and thus continuing deposition of the transported grains,
**characterized in that**
in its outer region in the vicinity of the circumferential line, the separating element (7) has a separating region (10) made exclusively of metal, which adjoins a fixing region (9) consisting of plastic, and the recesses (11) are arranged in the separating region (10).

2. Single grain seeder according to Claim 1,
**characterized in that** the separating region (10) surrounds the fixing region (9) consisting of plastic annularly or is incorporated annularly in the latter.

3. Single grain seeder according to at least one of the preceding claims,
**characterized in that** the separating region (10) is formed as an annular element.

4. Single grain seeder according to at least one of the preceding claims,
**characterized in that** the separating element (7) is disc-shaped.

5. Single grain seeder according to Claim 2,
**characterized in that** the annularly surrounding separating region (10) continues the fixing region (9) consisting of plastic outwards in the radial direction.

6. Single grain seeder according to Claims 2 and 4,
**characterized in that** the annularly surrounding separating region (10) is enclosed annularly on the outside in the radial direction by a plastic region.

7. Single grain seeder according to Claim 1 or 2,
**characterized in that** the separating element (7) is formed as a drum (7B).

8. Single grain seeder according to Claim 7,
**characterized in that** the circumferential surface (15) of the drum (7B) consists of metal.

9. Single grain seeder according to at least one of the preceding claims,
**characterized in that** the covering element (20) is designed in the manner of a roller, is pressed against the grain-free side of the separating element (7) and runs along this side.

10. Single grain seeder according to at least one of the preceding claims,
wherein the separating element (7) is assigned at least one ejector element (21) formed in the manner of a roller and running along its grain-free side,
**characterized in that** the ejector element (21) has suitable pins in the shape of a star along its circumferential line in order to engage in the recesses (11).

## Revendications

1. Semoir mono-graine agricole comprenant un dispositif de séparation (5) pour séparer les produits en graines, de préférence pour séparer les semences, le dispositif de séparation (5) présentant un boîtier (6) et au moins un élément de séparation (7) entraîné en rotation au moyen d'un arbre, qui divise l'espace intérieur du boîtier (6) de telle sorte qu'une différence de pression entre une première région et une deuxième région puisse être générée au moyen d'une soufflante, l'élément de séparation (7) présentant des évidements appropriés (11) répartis à intervalles réguliers le long de sa direction périphérique et/ou dans sa région extérieure à proximité de la ligne périphérique pour entraîner des graines individuelles du produit en graines, les évidements (11) formant des liaisons spatiales entre la première et la deuxième région du boîtier (6) et les graines s'accumulant sur ces évidements (11) en raison de la différence de pression, et le dispositif de séparation (5) présentant en outre un élément de recouvrement (20) à un emplacement approprié, lequel recouvre temporairement les évidements (11) pour supprimer la différence de pression et par conséquent une accumulation prolongée des graines transportées,
**caractérisé en ce que** l'élément de séparation (7) présente, dans sa région extérieure à proximité de la ligne périphérique, une région de séparation (10) fabriquée exclusivement en métal, qui se raccorde à une région de fixation (9) constituée de plastique et les évidements (11) sont disposés dans la région de séparation (10).

2. Semoir mono-graine selon la revendication 1,
**caractérisé en ce que** la région de séparation (10) vient en prise sous forme annulaire autour de la région de fixation (9) constituée de plastique ou est incorporée sous forme annulaire dans celle-ci.

3. Semoir mono-graine selon au moins l'une quelconque des revendications précédentes,
**caractérisé en ce que** la région de séparation (10) est réalisée sous forme d'élément annulaire.

4. Semoir mono-graine selon au moins l'une des revendications précédentes,
**caractérisé en ce que** l'élément de séparation (7) est réalisé en forme de disque.

5. Semoir mono-graine selon la revendication 2,
**caractérisé en ce que** la région de séparation (10) venant en prise sous forme annulaire sur le pourtour prolonge vers l'extérieur dans la direction radiale la région de fixation (9) constituée de plastique.

6. Semoir mono-graine selon les revendications 2 et 4,
**caractérisé en ce que** la région de séparation (10) venant en prise sous forme annulaire sur le pourtour est entourée dans la direction radiale vers l'extérieur sous forme annulaire par une région en plastique.

7. Semoir mono-graine selon la revendication 1 ou 2,
**caractérisé en ce que** l'élément de séparation (7) est réalisé sous forme de tambour (7B).

8. Semoir mono-graine selon la revendication 7,
**caractérisé en ce que** la surface d'enveloppe (15) du tambour (7B) se compose de métal.

9. Semoir mono-graine selon au moins l'une quelconque des revendications précédentes,
**caractérisé en ce que** l'élément de recouvrement (20) est réalisé sous forme de rouleau, est pressé contre le côté sans graines de l'élément de séparation (7) et s'étend le long de ce côté.

10. Semoir mono-graine selon au moins l'une quelconque des revendications précédentes,
dans lequel au moins un élément d'éjection (21) réalisé sous forme de rouleau et s'étendant le long de son côté sans graines est associé à l'élément de séparation (7),
**caractérisé en ce que** l'élément d'éjection (21) présente des mandrins aptes à s'engager dans les évidements (11) sous forme stellaire le long de sa ligne périphérique.
